# NEUE EUROPÄISCHE PATENTSCHRIFT

(11) **EP 2 944 171 B2**
(45) Veröffentlichungstag und Bekanntmachung des Hinweises auf die Entscheidung über den Einspruch: **27.09.2023**
(45) Hinweis auf die Patenterteilung: 30.01.2019
(21) Anmeldenummer: 15401040.9
(22) Anmeldetag: 05.05.2015
(51) Int. Cl.: A01B 69/00, A01B 79/00

(54) **LANDWIRTSCHAFTLICHE ARBEITSMASCHINE**
AGRICULTURAL WORKING MACHINE
MACHINE AGRICOLE

(30) Priorität: 14.05.2014 DE 102014106775
(43) Veröffentlichungstag der Anmeldung: 18.11.2015
(60) Teilanmeldung: 16170983.7
(73) Patentinhaber: Amazonen-Werke H. Dreyer SE & Co. KG, 49205 Hasbergen (DE)
(72) Erfinder: Mindrup, Tobias, 49080 Osnabrück (DE); Wessels, Thomas, 49080 Osnabrück (DE); Enge, Tobias, 48477 Hörstel (DE)
(74) Vertreter: Grünecker Patent- und Rechtsanwälte PartG mbB

(56) Entgegenhaltungen:
- EP-A1- 1 493 316
- EP-A1- 1 529 428
- EP-A1- 2 135 498
- EP-A1- 2 622 955
- DE-A1- 3 507 570
- DE-A1-102006 055 858
- JP-A- H04 104 712
- US-A1- 2011 266 365
- US-A1- 2014 074 360

## Beschreibung

Die Erfindung betrifft eine landwirtschaftliche Arbeitsmaschine nach dem Oberbegriff des Anspruchs 1 und ein Verfahren zum Steuern eines Arbeitsgeräts einer landwirtschaftlichen Arbeitsmaschine gemäß dem Oberbegriff des Anspruchs 8.

Gattungsgemäße landwirtschaftliche Arbeitsmaschinen sind aus dem Stand der Technik bekannt. So zeigt beispielsweise die EP 2 679 085 A1 eine landwirtschaftliche Arbeitsmaschine mit einem Arbeitsgerät, wobei an dem Arbeitsgerät eine Sensoreinheit, insbesondere eine Ultraschallsensoreinheit, angeordnet ist, die die Abstandsmessung gegenüber dem unter dem Arbeitsgerät befindlichen Boden übernimmt und anhand des gemessenen Abstands einen Bearbeitungsabstand berechnet, demgemäß das Arbeitsgerät, beispielsweise der Düngemittelspritzer, betrieben wird. JP H04 104712 offenbart eine landwirtschaftliche Arbeitsmaschine mit einer Sensoreinrichtung die so angeordnet ist, dass sie 2D-Informationen eines vor der Arbeitsmaschine befindlichen Geländes erfassen kann.

Die bekannten landwirtschaftlichen Arbeitsmaschinen und vorgesehenen Sensoren ermöglichen jedoch eine Anpassung der Arbeitshöhe oder anderen Betriebsparametern der landwirtschaftlichen Arbeitsmaschine nur in sehr begrenztem Umfang, da die zwischen Messung und notwendiger Schaltung zur Verfügung stehende Zeit sehr kurz ist.

Es ist daher Aufgabe der vorliegenden Erfindung, eine landwirtschaftliche Arbeitsmaschine und ein Verfahren zum Betrieb einer solchen bereitzustellen, das effektiver auf Änderungen in der Umgebung des Arbeitsgeräts reagieren kann.

Diese Aufgabe wird erfindungsgemäß durch die landwirtschaftliche Arbeitsmaschine nach unabhängigem Anspruch 1 und das Verfahren zum Steuern eines Arbeitsgeräts einer landwirtschaftlichen Arbeitsmaschine nach Anspruch 8 gelöst. Vorteilhafte Weiterbildungen der Erfindung sind in den Unteransprüchen erfasst.

Die erfindungsgemäße landwirtschaftliche Arbeitsmaschine ist dadurch gekennzeichnet, dass die Sensoreinrichtung so angeordnet ist, dass sie die wenigstens zweidimensionalen Informationen eines vor der Arbeitsmaschine liegenden Geländes erfassen kann. Dadurch kann bereits in einem gewissen zeitlichen Rahmen vor dem eigentlichen Eintreffen der landwirtschaftlichen Arbeitsmaschine und des Arbeitsgeräts an dem zu bearbeitenden Bereich des Feldes zweidimensionale Informationen über diesen Bereich gesammelt und mit Hilfe der Steuereinrichtung die Steuerung des Arbeitsgeräts vorbereitet bzw. durchgeführt werden. Das Arbeitsgerät kann so deutlich genauer an die Gegebenheiten des vor der Arbeitsmaschine liegenden Geländes angepasst werden, wodurch die Produktivität erhöht werden kann. Unter dem vor der Arbeitsmaschine gelegenen Gelände ist in diesem Zusammenhang nicht nur der Boden des Feldes zu verstehen, sondern auch sämtlicher Bewuchs auf dem Feld. Ebenso zählt dazu nicht nur die Oberfläche des Bodens sondern auch tiefer gelegene Bodenschichten. Das Erfassen von 2D-Informationen bezieht sich auf Informationen des Geländes, die in einer Ebene senkrecht zur Fahrtrichtung des Fahrzeuges erfasst werden. Diese Ebene kann in Fahrtrichtung eine gewisse Ausdehnung besitzen, die beispielsweise über das Blickfeld der Sensoreinrichtung bestimmt wird. Obwohl sich dadurch ein dreidimensionaler Ausschnitt des Geländes ergibt, soll dies unter dem Begriff der (im Wesentlichen) zweidimensionalen Information zusammengefasst werden. Die erfindungsgemäße Arbeitsmaschine kann als Feldspritze eingesetzt werden und ist dadurch gekennzeichnet, dass die Sensoreinrichtung ein optischer Sensor ist oder einen optischen Sensor umfasst, wobei die Sensoreinrichtung Bestandshöhen von auf dem vor der Arbeitsmaschine liegenden Gelände befindlichen Bestand messen kann und die Steuereinheit eine Arbeitshöhe des Arbeitsgeräts in Abhängigkeit der Bestandshöhe steuert. Hierdurch werden die Vorteile der landwirtschaftlichen Arbeitsmaschine auf die Bestimmung der Arbeitshöhe des Arbeitsgeräts in Abhängigkeit der Bestandshöhe angewendet. Die Steuereinheit kann aus sämtlichen zu einem Zeitpunkt ermittelten Bestandshöhen eines bestimmten Bereichs des Geländes eine optimale Arbeitshöhe für das Arbeitsgerät errechnen. Da es im Sinne einer ökonomischen Bearbeitung des Feldes vorteilhaft sein kann, nicht immer die maximale oder minimale Arbeitshöhe, die anhand der Informationen möglich wäre, anzusteuern, kann mit Hilfe der optimalen Arbeitshöhe unter Berücksichtigung eventuell weiterer Betriebsparameter ein Gleichgewicht zwischen idealer Bearbeitung und ökonomischen Gesichtspunkten gefunden werden.

In einer Ausführungsform ist die Sensoreinrichtung ausgebildet, um Informationen des vor der Arbeitsmaschine liegenden Geländes kontinuierlich oder in bestimmten Zeitintervallen zu erfassen. Durch kontinuierliches Messen kann ein zweidimensionales Abbild der gesamten Umgebung erstellt werden und so eine lückenlose Steuerung des Arbeitsgeräts erreicht werden. Handelt es sich jedoch um eine zu erfassende Information, beispielsweise die Höhe des Feldbodens an bestimmten Stellen, so kann eine Messung in deutlich größeren Zeitabständen, beispielsweise 3 oder 5 Sekunden genügen, um eine grobe Information über das Verhalten des Geländes zu erlangen.

Weiterhin kann die Sensoreinrichtung ausgebildet sein, Informationen des vor der Arbeitsmaschine liegenden Geländes wenigstens über einen Bereich, der der Arbeitsbreite des Arbeitsgeräts entspricht, zu erfassen. Da für eine effektive Ausbringung von Material oder Bearbeitung eines Feldes nicht die Breite des eigentlichen Zugfahrzeugs sondern die Arbeitsbreite relevant ist, kann mit dieser Ausführungsform gewährleistet werden, dass eine Erfassung und damit einhergehende Auswertung von Informationen über die gesamte Arbeitsbreite des Arbeitsgeräts durchgeführt wird, um das Ergebnis zu optimieren.

Es kann auch vorgesehen sein, dass die Sensoreinrichtung am Zugfahrzeug und/oder am Arbeitsgerät angeordnet ist. Die Anordnung am Zugfahrzeug erlaubt eine Erfassung des vor der Arbeitsmaschine liegenden Geländes sogar vor Erreichen des Zugfahrzeugs, wohingegen eine Anbringung der Sensoreinrichtung am Arbeitsgerät zwar eine nur verkürzte Reaktionszeit ermöglicht, jedoch Veränderungen in den Gegebenheiten des Geländes durch das Überfahren mit dem Zugfahrzeug berücksichtigt werden können.

In einer Weiterbildung ist die Arbeitsmaschine dadurch gekennzeichnet, dass die Sensoreinrichtung 3D-Informationen eines vor der Arbeitsmaschine liegenden Geländes erfassen kann. 3D-Informationen liefern eine noch detailliertere Grundlage für eine Berechnung und Steuerung des Arbeitsgeräts. Das Erfassen von 3D-Informationen umfasst dabei in jedem Fall auch die vorher beschriebenen zweidimensionalen Informationen des Geländes.

Ferner kann die Arbeitsmaschine einen Geschwindigkeitssensor umfassen, der eine aktuelle Geschwindigkeit der Arbeitsmaschine messen und ein für die Geschwindigkeit indikatives Signal an die Steuereinheit übertragen kann, wobei die Steuereinheit die wenigstens eine Funktion des Arbeitsgeräts basierend einer Extrapolation der Geschwindigkeit der Arbeitsmaschine und einem so ermittelten Zeitpunkt, wann das Arbeitsgerät sich über einem von der Sensoreinrichtung vermessenen Bereich des Geländes befindet, zu steuern. Durch Verknüpfung der von dem Gelände erfassten Informationen und Bewegungsinformationen kann hier in vorteilhafter Weise vorausberechnet werden, wann eine Steuerung des Arbeitsgeräts erforderlich ist und so der optimale Zeitpunkt für beispielsweise eine Veränderung der Arbeitshöhe ermittelt werden.

In einer Weiterbildung dieser Ausführungsform ist vorgesehen, dass die Sensoreinrichtung eine Kamera ist, und die Steuereinheit aus der Bildinformation von durch die Kamera aufgenommenen Bilder eine Bestandshöhe bestimmen kann, oder dass die Sensoreinrichtung ein Laser ist, der eine Abstandsmessung zu vor der Arbeitsmaschine befindlichem Bestand durchführen kann, und die Steuereinheit aus der Abstandsmessung eine Bestandshöhe errechnen kann. Während Kameras nur eine relativ grobe Information liefern, die noch mit Bildverarbeitungsprogrammen bearbeitet werden muss, liefert der Laser deutlich genauere Informationen. Beide Ausführungsformen können je nach notwendiger Genauigkeit vorteilhaft benutzt werden.

Das erfindungsgemäße Verfahren zum Steuern eines Arbeitsgeräts einer landwirtschaftlichen Arbeitsmaschine ist dadurch gekennzeichnet, dass wenigstens eine Funktion des Arbeitsgeräts in Abhängigkeit von 2D-Informationen über ein vor der Arbeitsmaschine liegendes Gelände gesteuert wird. Diese vorausschauende Erfassung von Informationen ermöglicht eine möglichst effektive Steuerung des Arbeitsgeräts. Das Verfahren kann genutzt werden, um mittels eines optischen Sensors Bestandshöhen von auf dem vor der Arbeitsmaschine liegenden Gelände befindlichen Bestand zu messen und die Arbeitshöhe des Arbeitsgeräts in Abhängigkeit der Bestandshöhen einzustellen. Das erfindungsgemäße Verfahren wird hier auf die Bestimmung der Arbeitshöhe in Abhängigkeit von Bestandshöhen in vorteilhafter Weise angewendet. Zudem kann aus den zu einem Zeitpunkt ermittelten Bestandshöhen eines bestimmten Bereichs des Geländes eine optimale Bestandshöhe ermittelt und die Arbeitshöhe des Arbeitsgeräts entsprechend dieser optimalen Bestandshöhe eingestellt werden. So kann ein Gleichgewicht zwischen ökonomischen Gesichtspunkten und den ermittelten Bestandshöhen gefunden werden.

Das Verfahren kann beinhalten, dass Informationen des vor der Arbeitsmaschine liegenden Geländes kontinuierlich oder in bestimmten Zeitintervallen erfasst werden. So kann ein Gleichgewicht zwischen der benötigten Informationsmenge und dem ökonomischen Umgang mit gesammelten Daten erreicht werden.

In einer Weiterbildung sind die Zeitintervalle variabel und werden in Abhängigkeit von der Geschwindigkeit und/oder Beschleunigung der Arbeitsmaschine eingestellt. Werden Bewegungsdaten der landwirtschaftlichen Arbeitsmaschine berücksichtigt, um die Intervalle zur Informationsaufnahme bzw. -erfassung zu bestimmen, kann stets dieselbe Genauigkeit bei der Erfassung der Informationen sichergestellt werden.

Weiterhin können Informationen über das vor der Arbeitsmaschine liegende Gelände wenigstens über die Arbeitsbreite des Arbeitsgeräts bestimmt werden. Dies erlaubt eine Berücksichtigung sämtlicher für die Bearbeitung des Feldes relevanter Informationen.

In einer Ausführungsform werden 3D-Informationen eines vor der Arbeitsmaschine liegenden Geländes erfasst. Mittels dreidimensionalen Informationen kann das Arbeitsgerät genauer gesteuert werden.

Es ist vorteilhaft, wenn die Funktion des Arbeitsgeräts in Abhängigkeit der Informationen über das Gelände zu einem Zeitpunkt gesteuert wird, der abhängig vom Zeitpunkt, zu dem die Informationen über das Gelände aufgenommen wurden, und abhängig von der momentanen Geschwindigkeit der Arbeitsmaschine ist. Somit kann vorausschauend eine genaue Steuerung des Arbeitsgeräts geplant werden.

In einer Weiterbildung dieser Ausführungsform ist das Verfahren dadurch gekennzeichnet, dass basierend auf von einer Kamera aufgenommenen Bildinformationen des vor der Arbeitsmaschine befindlichen Bestands Bestandshöhen ermittelt werden oder dass eine Abstandsmessung zum Bestand auf dem vor der Arbeitsmaschine befindlichen Gelände durch einen Laser erfolgt und aus dem bestimmten Abstand eine Bestandshöhe ermittelt wird.

In einer Ausführungsform wird die Bodenfeuchte durch Reflexion kontinuierlich und berührungslos bestimmt.

Weiterhin kann aus allen zu einem Zeitpunkt gemessenen Bodenfeuchten und Bodenkonturen eines bestimmten Bereichs des Geländes eine optimale Saattiefe bestimmt werden und das Arbeitsgerät in Abhängigkeit der optimalen Saattiefe gesteuert werden. Auch hier kann für das Aussäen die möglichst optimale Parametereinstellung in Abhängigkeit der aufgenommen Informationen und ökonomischen Gesichtspunkten gefunden werden.

Die Zeichnungen zeigen
- Fig. 1: eine schematische Ansicht einer erfindungsgemäßen Landwirtschaftsmaschine.
- Fig. 2: eine schematische Draufsicht auf eine erfindungsgemäße Landwirtschaftsmaschine auf einem Feld.
- Fig. 3a-e: eine schematische Darstellung der erfindungsgemäßen Vorrichtung gemäß zweier Ausführungsformen und eines Verfahrens.
- Fig. 4a+b: eine schematische Darstellung einer weiteren Ausführungsform des Verfahrens.

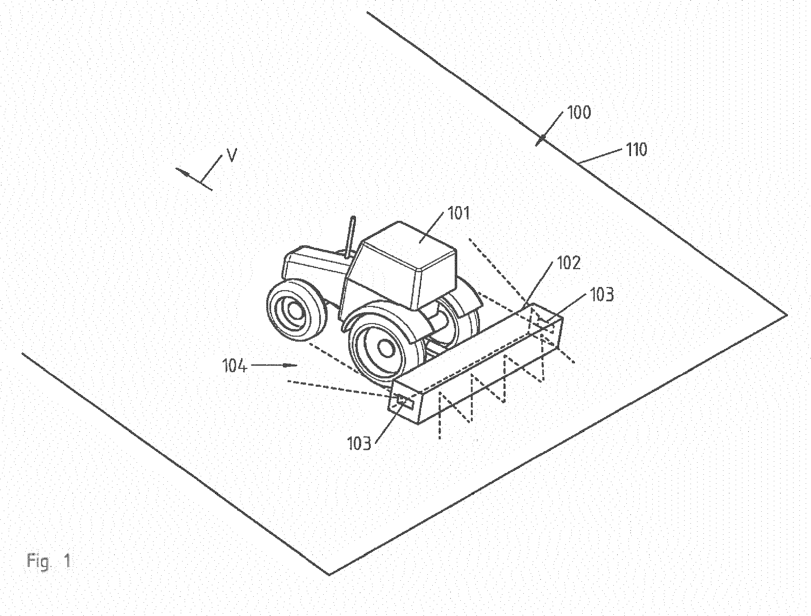

Fig. 1 zeigt eine erfindungsgemäße landwirtschaftliche Arbeitsmaschine 100 in einer schematischen Darstellung auf einem Feld 110. Die landwirtschaftliche Arbeitsmaschine 100 umfasst dabei üblicherweise ein Zugfahrzeug 101 und ein Arbeitsgerät 102. Dabei müssen Zugfahrzeug und Arbeitsgerät nicht notwendigerweise als zwei separate Fahrzeuge ausgebildet sein sondern können auch in einem Fahrzeug zusammengefasst sein. Weiterhin kann das Arbeitsgerät von dem Zugfahrzeug 101 lösbar sein, so dass mit Hilfe ein und desselben Zugfahrzeugs unterschiedliche Arbeitsgeräte 102 verwendet werden können. Als Arbeitsgeräte kommen sämtliche bekannte Maschinen aus der Landwirtschaftstechnik in Frage, wie beispielsweise Feldspritze, Düngerverteiler, Kreiselegge, Sämaschine und sofort.

Die Arbeitsmaschine 100 umfasst erfindungsgemäß eine Sensoreinrichtung 103, die derart an der landwirtschaftlichen Arbeitsmaschine 100 angebracht ist, dass sie wenigstens zweidimensionale Informationen über ein vor der Arbeitsmaschine 100 liegendes Gelände erfassen kann. Dieses Gelände kann beispielsweise der Abschnitt 104 des zu bearbeitenden Feldes 110 sein, der sich vor der landwirtschaftlichen Arbeitsmaschine befindet. Vorzugsweise ist die Sensoreinrichtung 103 so ausgebildet, dass sie während der Bewegung der Arbeitsmaschine 100 mit der Geschwindigkeit v über das zu bearbeitende Feld kontinuierlich oder in bestimmten zeitlichen Abständen wenigstens zweidimensionale Informationen über das Feld erfasst, so dass abschließend die entsprechende Information für das gesamte Feld zur Verfügung steht.

In der dargestellten Ausführungsform ist die Sensoreinrichtung 103 aus zwei separaten Einrichtungen an den gegenüberliegenden Enden des Arbeitsgeräts 102 (hier beispielsweise eine Feldspritze) gebildet, wobei diese Einrichtungen in Fahrtrichtung ausgerichtet sind, sodass sie Informationen über das vordem Arbeitsgerät 102 liegende Gelände 104 erfassen.

Bei diesen Informationen kann es sich um, je nach verwendetem Arbeitsgerät, für die Bearbeitung des Feldes relevante Informationen, wie beispielsweise die Bestandshöhe von bereits auf dem Feld gewachsenen Pflanzen, die Dichte des Bestands, Qualität und Eigenschaften des Bodens, wie beispielsweise Bodenfeuchte oder Ähnliches handeln. Zu diesem Zweck kann die Sensoreinrichtung 103 auf unterschiedlichste Art und Weise ausgebildet sein. Sie kann beispielsweise eine Kamera umfassen oder einen Laser und eine entsprechende Empfangseinheit zum Erfassen der reflektierten Laserstrahlung von dem Bestand oder vom Boden. Weiterhin können andere Sensoren, wie Mikrowellensensoren, Schallsensoren oder Ähnliches zum Einsatz kommen.

Da jedes Arbeitsgerät gegebenenfalls unterschiedliche Anforderungen an die zu erfassenden Informationen stellt (Art der Information und Genauigkeit beispielsweise), ist es vorteilhaft, wenn die Sensoreinrichtung 103 direkt am Arbeitsgerät angeordnet ist. So kann bei Austausch des Arbeitsgeräts direkt die Sensoreinrichtung ausgetauscht werden.

Es kann jedoch auch vorgesehen sein, dass die Sensoreinrichtung 103 an der Zugmaschine 101 angeordnet ist, um ein uneingeschränktes Blickfeld zu gewährleisten. Wenn die Zugmaschine 101 für unterschiedliche Arbeitsgeräte 102 verwendet wird, ist es in dieser Ausführungsform besonders vorteilhaft, wenn die Sensoreinrichtung 103 austauschbar ist, so dass je nach Arbeitsgerät eine entsprechende Sensoreinrichtung an der Arbeitsmaschine 100 angebracht werden kann, um die für die Funktion des Arbeitsgeräts notwendigen Informationen über das vor der Arbeitsmaschine 100 liegende Gelände zu erfassen.

Erfindungsgemäß ist eine hier nicht dargestellte Steuereinrichtung in der Arbeitsmaschine 100, beispielsweise im Arbeitsgerät 102 selbst oder in der Zugmaschine 101 vorgesehen, die die von der Sensoreinrichtung 103 erfassten Informationen auswerten kann. Diese Auswertung kann auf unterschiedlichste Art und Weise erfolgen, hat jedoch als Ergebnis Parameter, die eine Steuerung der Funktion des Arbeitsgeräts erlauben. So kann die Steuereinrichtung beispielsweise aus den von der Sensoreinrichtung 103 aufgenommenen Bestandshöhen eine Arbeitshöhe für das Arbeitsgerät 102, wie beispielsweise einen Düngerstreuer, errechnen und entsprechend der errechneten Arbeitshöhe zu der jeweiligen Bestandshöhe die Arbeitshöhe des Arbeitsgeräts 102 einstellen.

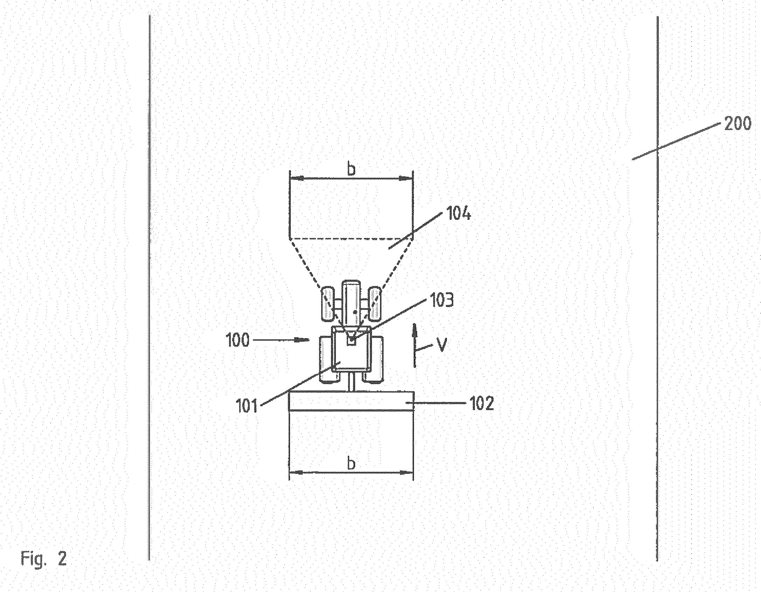

Fig. 2 zeigt eine erfindungsgemäße Arbeitsmaschine 100, wie sie beispielsweise auch in Fig. 1 dargestellt wird, auf einem Feld 200 in Draufsicht. Arbeitsgeräte 102 verfügen zumeist über eine bestimmte Arbeitsbreite b, beispielsweise 3 m, 5 m, 6 m oder 12 m. Um die Funktionen des Arbeitsgeräts 102 möglichst effektiv über die gesamte Arbeitsbreite zu steuern, ist vorgesehen, dass die Sensoreinrichtung 103 die zweidimensionalen Informationen über das vor der Arbeitsmaschine 100 liegende Gelände 104 auf dem Feld 200 wenigstens auf einer Breite b, die der Arbeitsbreite b des Arbeitsgeräts 102 entspricht, erfasst. Das bedeutet, dass beispielsweise die Kamera einen so großen Blickwinkel haben sollte, dass sie in einer bestimmten Entfernung von der landwirtschaftlichen Arbeitsmaschine 100 (beispielsweise in 10 m Entfernung oder in 15 m Entfernung) ein Gebiet mit einer Breite b, die der Arbeitsbreite des Arbeitsgeräts entspricht, erfassen kann und die entsprechenden Informationen aufnehmen kann. Bei Verwendung von einem Lasersensor ist der Lasersensor so eingestellt, dass er auch über die Arbeitsbreite b Informationen über das Gelände 104 erfassen kann. In Abhängigkeit der so erfassten Informationen kann dann die Funktion des Arbeitsgeräts 102 als Ganzes oder, sofern das Arbeitsgerät 102 aus einzeln ansteuerbaren Komponenten besteht, die Funktion der einzelnen Komponenten gesteuert werden.

Da die Informationen der Sensoreinrichtung der beschriebenen Steuereinrichtung bereits vor Erreichen des entsprechenden Geländes zur Verfügung stehen, kann die Steuereinheit das Arbeitsgerät 102 rechtzeitig ansteuern, um sobald das Arbeitsgerät 102 das entsprechende Gelände 104 überfährt, beispielsweise die Arbeitshöhe oder die Saattiefe entsprechend den vorher aufgenommenen Informationen zu realisieren.

Um diesen Vorteil weiter auszunutzen, kann vorgesehen sein, dass die Arbeitsmaschine 100, wie es in Fig. 1 und 2 dargestellt ist, zusätzlich zu der Sensoreinrichtung 103 weitere Bewegungs- oder GPS-Sensoren umfasst, die Ort, Geschwindigkeit und vorzugsweise auch Beschleunigung der Arbeitsmaschine erfassen können. Unter Berücksichtigung dieser Daten und den aufgenommenen zweidimensionalen Informationen über das Gelände 104 kann die Steuereinheit dann zusätzlich berechnen oder extrapolieren, wann das Arbeitsgerät 102 voraussichtlich auf dem Gelände 104 ankommen wird und dementsprechend die Funktion des Arbeitsgeräts steuern. Da die Sensoreinrichtungen kontinuierlich oder zumindest in Zeitintervallen permanent Informationen von dem Gelände sammelt, wird der Steuereinrichtung somit genug Information zur Verfügung gestellt, um das Arbeitsgerät während des gesamten Betriebs über das Gelände kontinuierlich zu steuern.

Dabei können auch Latenzzeiten Berücksichtigung finden. So erfordert es beispielsweise eine gewisse Zeit, um die Arbeitshöhe eines Arbeitsgeräts zu verändern. Stellt die Steuereinrichtung fest, dass aufgrund der zweidimensionalen Informationen über das vor der Arbeitsmaschine liegenden Geländes eine Anpassung der Arbeitshöhe des Arbeitsgeräts 102 zu einem bestimmten Zeitpunkt notwendig ist, so kann die Steuereinheit unter Berücksichtigung der momentanen Geschwindigkeit der Arbeitsmaschine 100 aber auch unter Berücksichtigung der für die Verstellung der Arbeitshöhe von der Ausgangshöhe auf die gewünschte Höhe bestimmen, wann das Steuersignal an das Arbeitsgerät 102 übertragen werden muss, um sicherzustellen, dass an dem vorgesehenen Ort die vorgesehene Arbeitshöhe erreicht wird.

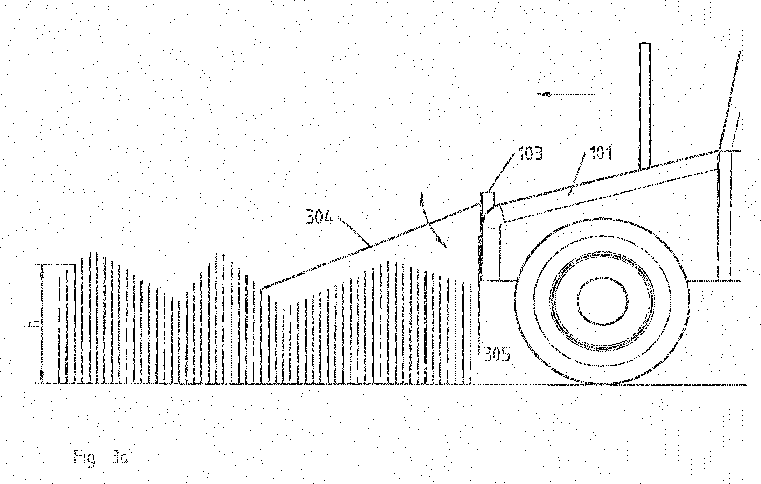

Fig. 3a zeigt dazu eine speziellere Ausführung der erfindungsgemäßen landwirtschaftlichen Arbeitsmaschine, wie sie beispielsweise in Fig. 1 und Fig. 2 dargestellt ist. Der Einfachheit halber ist zu diesem Zweck in Fig. 3a nur das Zugfahrzeug 101 teilweise dargestellt. Fig. 3a veranschaulicht das Erfassen einer Bestandshöhe h des vor der landwirtschaftlichen Arbeitsmaschine befindlichen Bestands auf einem Feld, also die Höhe der auf dem Feld gewachsenen Pflanze. In Fig. 3a ist die Sensoreinrichtung 103 als Laser ausgebildet, der kontinuierlich oder in kurzen aufeinanderfolgenden Abständen einen Laserstrahl 304 in einem vorbestimmten Winkel in Richtung des Feldes schickt. Entweder direkt in der Sensoreinrichtung 103 oder separat davon kann ein Detektor 305 vorgesehen sein, der die reflektierte Laserstrahlung auffängt. Entweder direkt in dem Detektor 305 bzw. der Sensoreinrichtung 103 oder in der Steuereinrichtung kann dann der Laufzeitunterschied bestimmt und daraus die Höhe und die Entfernung des Bestands ermittelt werden. Um die Genauigkeit der erfassten Informationen zu erhöhen, kann auch vorgesehen sein, dass der von der Sensoreinrichtung 103 emittierte Laserstrahl verschwenkbar ist, wie mit der dargestellten Pfeilrichtung angedeutet wird. So können in einem deutlich größeren Bereich des vor der Arbeitsmaschine befindlichen Geländes Informationen gesammelt werden.

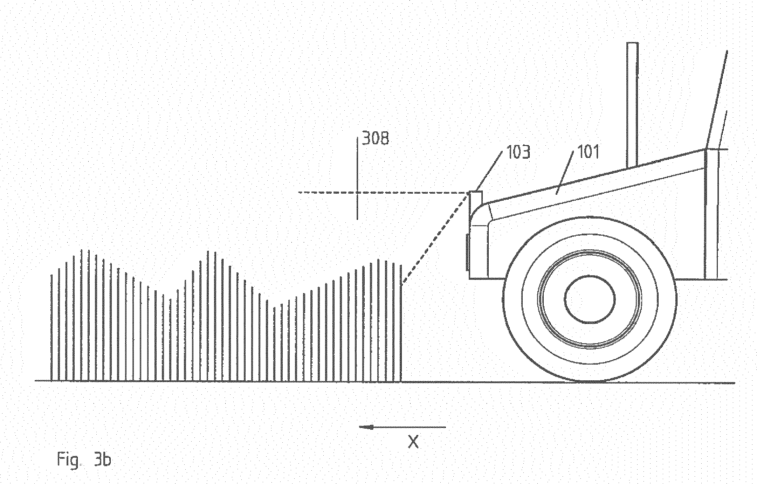

Fig. 3b zeigt eine andere Ausführungsform, bei der die Sensoreinrichtung 103 eine Kamera umfasst, die ein einem bestimmten Blickwinkel 308 beispielsweise mit einer Bildwiederholungsfrequenz von 20 Bildern pro Sekunde oder 40 Bildern pro Sekunde oder mehr das vor der Arbeitsmaschine befindliche Gelände filmt. Aus den so erfassten einzelnen Bildinformationen kann die Steuereinrichtung mittels bekannter Bildverarbeltungsprogramme eine Bestandshöhe des vor der Arbeitsmaschine befindlichen Bestands ermitteln. Aufgrund der bei Kameras üblicherweise festgelegten Bildwiederholungsrate erfolgt die Abstandsbestimmung hier in festgelegten Zeitintervallen.

Es sei erwähnt, dass das Erfassen von Informationen jedoch auch in vorteilhafter Weise an die Geschwindigkeit der Arbeitsmaschine gekoppelt sein kann. Um beispielsweise eine stets konstante Erfassung von Informationen in Bezug auf den zurückgelegten Weg der Arbeitsmaschine zu gewährleisten, kann vorgesehen sein, dass die Frequenz, mit der die Informationen erfasst werden (bzw. das Zeitintervall zwischen zwei Erfassungszeitpunkten) in Abhängigkeit von der Geschwindigkeit der Arbeitsmaschine eingestellt wird. Bewegt sich die Arbeitsmaschine beispielsweise mit einer hohen Geschwindigkeit, so sollte das Erfassen von Informationen möglichst häufig pro Sekunde stattfinden, um sicherzustellen, dass die Informationen möglichst lückenlos sind. Bewegt sich die Arbeitsmaschine jedoch mit deutlich langsamerer Geschwindigkeit, so genügt eine weniger hohe Erfassungsfrequenz, so dass die Zeitintervalle zwischen den einzelnen Erfassungszeitpunkten größer sein können. So wird verhindert, dass zu viele redundante Informationen über ein und dasselbe Gebiet erfasst werden.

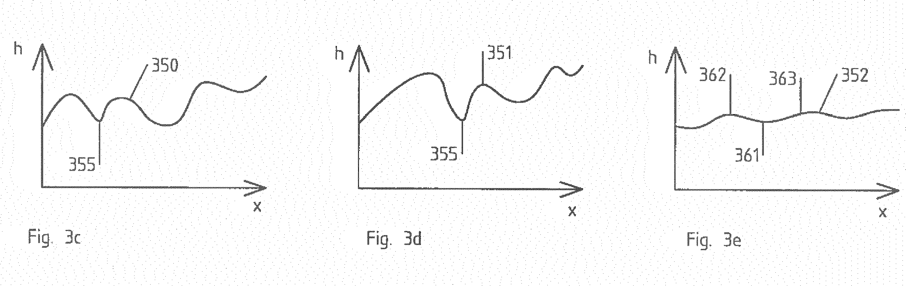

Ungeachtet dessen, ob die Informationen kontinuierlich erfasst werden, wie dies in Fig. 3c schematisch dargestellt ist, oder ob sie zu bestimmten Zeitintervallen erfasst werden, wie in Fig. 3d dargestellt, ermittelt die Steuereinrichtung oder ein entsprechend zugeordneter Mikroprozessor oder Computer eine bestimmte Eigenschaft des vor der Arbeitsmaschine befindlichen Geländes. Die hier gewählte Eigenschaft ist die Bestandshöhe h. Dazu wird jedem Ort x auf der in Fig. 3c dargestellten Kurve 350 bzw. der in Fig. 3d dargestellten Kurve 351, eine Bestandshöhe h zugeordnet. In Fig. 3d erfolgt dies nicht für jeden Punkt x auf dem Gelände sondern entsprechend der Erfassungsfrequenz der Informationen (beispielsweise 20 Bilder pro Sekunde bei Verwendung einer Kamera). Daraus ergibt sich auch in Abhängigkeit der Geschwindigkeit der Arbeitsmaschine eine Informationsdichte bzw. Punktdichte in der Kurve 351, die, sofern die Erfassungsfrequenz nicht mit der Geschwindigkeit verändert wird, durchaus schwanken kann. Während bei kontinuierlicher bzw. nahezu kontinuierlicher Informationserfassung, wie in Fig. 3c dargestellt, eine durchgängige Kurve für die Bestandshöhe angegeben werden kann, so erfordert die Informationserfassung in bestimmten zeitlichen Abständen, wie sie in Fig. 3d dargestellt ist, jedoch gegebenenfalls eine Interpolation zwischen den einzelnen Punkten.

In einer Ausführungsform der Erfindung ist jedoch vorgesehen, dass aus den insgesamt gewonnenen Informationen und unter Berücksichtigung eventueller ökonomischer oder technischer Gesichtspunkte aus den Informationen der Sensoreinrichtung 103 von der Steuereinrichtung eine Steuerkurve für das Arbeitsgerät abgeleitet wird. Diese kann beispielsweise bei der Steuerung der Arbeitshöhe der Arbeitsmaschine in Abhängigkeit von der Bestandshöhe umfassen, dass die Steuereinrichtung aus den aufgenommen Informationen eine effektive bzw. optimale Arbeitshöhe für das Arbeitsgerät ermittelt, wie diese in Fig. 3e dargestellt ist. Diese optimale Arbeitshöhe kann von der Steuereinrichtung beispielsweise so geregelt werden, dass zu große Amplituden bei der Einstellung der Arbeitshöhe des Arbeitsgeräts vermieden werden und dementsprechend die dargestellten Extreme 355 in den Fig. 3c und 3d hier nur durch ein leichtes Absenken der Arbeitshöhe in Fig. 3e im Bereich 361 berücksichtigt werden. So kann zum einen sichergestellt werden, dass zwar die unterschiedlichen Eigenschaften des vor der Arbeitsmaschine befindlichen Geländes beispielsweise mit Hinblick auf die Bestandshöhe Berücksichtigung finden, jedoch ein Gleichgewicht zwischen den erfassten Daten und anderen Randbedingungen, wie beispielsweise den technischen Charakteristika des Arbeitsgeräts eingehalten wird.

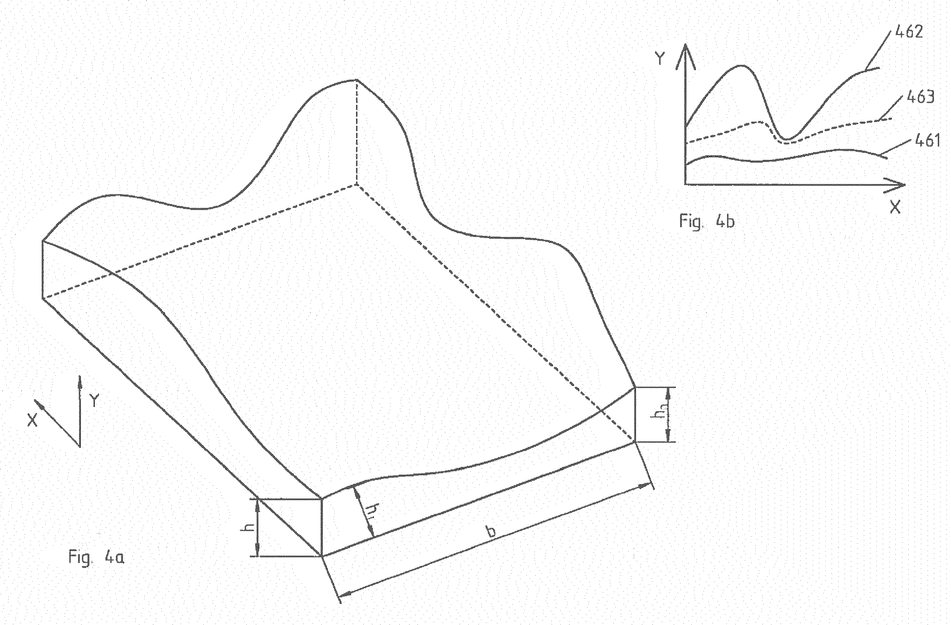

In Fig. 4 ist eine weitere Ausführungsform zur Bestimmung der optimalen Arbeitshöhe dargestellt. Dazu wird die Information über die gesamte Arbeitsbreite b der Arbeitsmaschine bzw. des Arbeitsgeräts von der Sensoreinrichtung aufgenommen, wie dies bereits mit Bezug auf Fig. 2 beschrieben wurde. Dazu werden, wie in Fig. 4a dargestellt, über die Arbeitsbreite b unterschiedliche Höhen h₁ über hᵢ bis hₙ bestimmt. Aus diesen kann eine minimale Höhe und eine maximale Höhe über den gesamten Bereich ermittelt werden. Über die Entfernung x sind die minimalen Höhen 461 und die maximalen Höhen 462 des Bestands in Fig. 4b dargestellt. Nun kann mit Hilfe der Steuereinrichtung bzw. eines entsprechend zugeordneten Computers oder Mikroprozessors, die optimale Arbeitshöhe 463 ermittelt werden, die im Normalfall zwischen der minimalen Höhe und der maximalen Höhe des Bestands liegt. Dabei kann so vorgegangen werden, dass über alle Höhen h₁ bis hₙ an einem bestimmten Punkt x gemittelt wird und der entsprechende Mittelwert als Arbeitshöhe festgelegt wird. Hier kann jedoch auch eine Gewichtung erfolgen. Diese Gewichtung kann beispielsweise berücksichtigen, wie oft bestimmte Höhen, die deutlich über dem errechneten Mittelwert oder deutlich unter dem errechneten Mittelwert liegen, gemessen wurden. Diese können dann beispielsweise weniger Gewicht bei der Errechnung der optimalen Arbeitshöhe eingeräumt werden. So können Bestandshöhen, die um bis zu 20 % vom Mittelwert abweichen, in die Berechnung beispielsweise mit einer Gewichtung von 0,5 eingehen. Noch weiter vom Mittelwert abweichende Höhen könnten nur noch mit 0,1 in die Berechnung eingehen. Extreme, und damit sehr seltene Abweichungen vom Mittelwert, werden so herausgerechnet.

Obwohl die Berechnung hier als über die gesamte Arbeitsbreite b durchgeführt dargestellt ist, ist es natürlich, wie oben beschrieben auch möglich, dass für Arbeitsgeräte, die über separat ansteuerbare Segmente verfügen, eine Erfassung von zweidimensionalen Informationen gesondert für jedes Segment von der Steuereinheit betrachtet wird. Dies bedeutet, dass obwohl die Sensoreinrichtung beispielsweise die Gesamtmenge an Informationen über das vor der Arbeitsmaschine liegende Gelände auf der Arbeitsbreite b erfasst, die Steuereinheit die gesammelten Informationen entsprechend den Segmenten des Arbeitsgeräts unterteilt und beispielsweise analog zu den oben beschriebenen Verfahren die Funktionen der einzelnen Segmente des Arbeitsgeräts separat ansteuert.

In den Fig. 3 und 4 wurde insbesondere auf die Bestandshöhe Bezug genommen, die von der Sensoreinrichtung gemessen und von der Steuereinrichtung verarbeitet wird, um eine optimale Arbeitshöhe für das Arbeitsgerät zu errechnen. Wie jedoch weiter oben beschrieben, können grundsätzlich sämtliche erfassten Informationen genutzt werden, um irgendwelche Funktionen des Arbeitsgeräts der landwirtschaftlichen Arbeitsmaschine in Abhängigkeit dieser Informationen zu steuern.

Die beschriebene landwirtschaftliche Arbeitsmaschine aber auch das erfindungsgemäße Verfahren sind nicht nur auf die Anwendung von beispielsweise Feldspritzen (Änderung der Arbeitshöhe) oder Sämaschinen (Änderung der Saattiefe) anwendbar, sondern können grundsätzlich in allen landwirtschaftlichen Arbeitsmaschinen vorteilhaft genutzt werden, sofern die Funktionsweise des Arbeitsgeräts von den äußeren Bedingungen des Geländes bzw. des Bestands abhängen. Es sei auch erwähnt, dass es mit Hilfe der vorgesehenen Sensoreinrichtung natürlich nicht nur möglich ist, zweidimensionale Informationen (Bestandshöhe über die Arbeitsbreite) zu ermitteln sondern, wie dies beispielsweise in Fig. 4a gezeigt ist, auch dreidimensionale Informationen ermittelt werden können.

## Patentansprüche

1. Landwirtschaftliche Arbeitsmaschine (100) umfassend ein Zugfahrzeug (101), ein Arbeitsgerät (102), eine Sensoreinrichtung (103) zum Erfassen von wenigstens 2D-Informationen und eine Steuereinrichtung, die mit der Sensoreinrichtung (103) und dem Arbeitsgerät (102) verbunden ist und geeignet ist, wenigstens eine Funktion des Arbeitsgeräts (102) in Abhängigkeit der von der Sensoreinrichtung (103) erfassten Information zu steuern, wobei die Sensoreinrichtung (103) so angeordnet ist, dass sie 2D-Informationen eines vor der Arbeitsmaschine (100) liegenden Geländes (104) erfassen kann, **dadurch gekennzeichnet, dass** die Sensoreinrichtung (103) ein optischer Sensor ist oder einen optischen Sensor umfasst, wobei die Sensoreinrichtung Bestandshöhen (h) von auf dem vor der Arbeitsmaschine liegenden Gelände befindlichen Bestand messen kann und die Steuereinheit eine Arbeitshöhe des Arbeitsgeräts (102) in Abhängigkeit der Bestandshöhe (h) steuert und dass die Steuereinheit aus sämtlichen zu einem Zeitpunkt ermittelten Bestandshöhen (h1, hi, hn) eines bestimmten Bereichs des Geländes eine optimale Arbeitshöhe (463) für das Arbeitsgerät errechnen kann, wobei das Erfassen von 2D-Informationen sich auf Informationen des Geländes bezieht, die in einer Ebene senkrecht zur Fahrtrichtung des Fahrzeuges erfasst werden, wobei die Bestandshöhe die Höhe einer auf dem Feld gewachsenen Pflanze bezeichnet.

2. Arbeitsmaschine nach Anspruch 1, **dadurch gekennzeichnet, dass** die Sensoreinrichtung (103) ausgebildet ist, Informationen des vor der Arbeitsmaschine (100) liegenden Geländes (104) kontinuierlich oder in bestimmten Zeitintervallen zu erfassen.

3. Arbeitsmaschine nach Anspruch 1 oder 2, **dadurch gekennzeichnet, dass** die Sensoreinrichtung (103) ausgebildet ist, Informationen des vor der Arbeitsmaschine (100) liegenden Geländes (104) wenigstens über einen Bereich, der der Arbeitsbreite (b) des Arbeitsgeräts (102) entspricht, zu erfassen.

4. Arbeitsmaschine nach einem der Ansprüche 1 bis 3, **dadurch gekennzeichnet, dass** die Sensoreinrichtung (103) am Zugfahrzeug (101) und/oder am Arbeitsgerät (102) angeordnet ist.

5. Arbeitsmaschine nach einem der Ansprüche 1 bis 4, **dadurch gekennzeichnet, dass** die Sensoreinrichtung (103) 3D-Informationen eines vor der Arbeitsmaschine (100) liegenden Geländes (104) erfassen kann.

6. Arbeitsmaschine nach einem der Ansprüche 1 bis 5, **dadurch gekennzeichnet, dass** die Arbeitsmaschine einen Geschwindigkeitssensor umfasst, der eine aktuelle Geschwindigkeit der Arbeitsmaschine messen und ein für die Geschwindigkeit indikatives Signal an die Steuereinheit übertragen kann, wobei die Steuereinheit die wenigstens eine Funktion des Arbeitsgeräts (102) basierend einer Extrapolation der Geschwindigkeit der Arbeitsmaschine und einem so ermittelten Zeitpunkt, wann das Arbeitsgerät sich über einem von der Sensoreinrichtung (103) vermessenen Bereich des Geländes (104) befindet, zu steuern.

7. Arbeitsmaschine nach Anspruch 1, **dadurch gekennzeichnet, dass** die Sensoreinrichtung (103) eine Kamera ist, und die Steuereinheit aus der Bildinformation von durch die Kamera aufgenommenen Bilder eine Bestandshöhe (h) bestimmen kann, oder dass die Sensoreinrichtung (103) ein Laser ist, der eine Abstandsmessung zu vor der Arbeitsmaschine (103) befindlichem Bestand durchführen kann, und die Steuereinheit aus der Abstandsmessung eine Bestandshöhe (h) errechnen kann.

8. Verfahren zum Steuern eines Arbeitsgeräts einer landwirtschaftlichen Arbeitsmaschine (100), wobei 2D-Informationen eines vor der Arbeitsmaschine (100) liegenden Geländes (104) erfasst werden und wenigstens eine Funktion des Arbeitsgeräts (102) in Abhängigkeit der 2D-Informationen gesteuert wird, **dadurch gekennzeichnet, dass** mittels eines optischen Sensors Bestandshöhen (h) von auf dem vor der Arbeitsmaschine liegenden Gelände (104) befindlichen Bestand gemessen werden und die Arbeitshöhe des Arbeitsgeräts (102) in Abhängigkeit der Bestandshöhen (h) eingestellt wird und dass aus den zu einem Zeitpunkt ermittelten Bestandshöhen (h1, hi, hn) eines bestimmten Bereichs des Geländes (104) eine optimale Arbeitshöhe (463) ermittelt und die Arbeitshöhe des Arbeitsgeräts(102) entsprechend dieser optimalen Arbeitshöhe (463) eingestellt wird, wobei das Erfassen von 2D-lnformationen sich auf Informationen des Geländes bezieht, die in einer Ebene senkrecht zur Fahrtrichtung des Fahrzeuges erfasst werden,
wobei die Bestandshöhe die Höhe einer auf dem Feld gewachsenen Pflanze bezeichnet.

9. Verfahren nach Anspruch 8, **dadurch gekennzeichnet, dass** Informationen des vor der Arbeitsmaschine (100) liegenden Geländes (104) kontinuierlich oder in bestimmten Zeitintervallen erfasst werden.

10. Verfahren nach Anspruch 9, **dadurch gekennzeichnet, dass** die Zeitintervalle variabel sind und in Abhängigkeit von der Geschwindigkeit und/oder Beschleunigung der Arbeitsmaschine (100) eingestellt werden.

11. Verfahren nach einem der Ansprüche 8 bis 10, **dadurch gekennzeichnet, dass** Informationen über das vor der Arbeitsmaschine (100) liegende Gelände (104) wenigstens über die Arbeitsbreite (b) des Arbeitsgeräts (102) bestimmt werden.

12. Verfahren nach einem der Ansprüche 8 bis 11, **dadurch gekennzeichnet, dass** 3D-Informationen eines vor der Arbeitsmaschine (100) liegenden Geländes (104) erfasst werden.

13. Verfahren nach einem der Ansprüche 8 bis 12, **dadurch gekennzeichnet, dass** die Funktion des Arbeitsgeräts (102) in Abhängigkeit der Informationen über das Gelände (104) zu einem Zeitpunkt gesteuert wird, der abhängig vom Zeitpunkt, zu dem die Informationen über das Gelände (104) aufgenommen wurden, und abhängig von der momentanen Geschwindigkeit der Arbeitsmaschine (100) ist.

14. Verfahren nach Anspruch 8, **dadurch gekennzeichnet, dass** basierend auf von einer Kamera aufgenommenen Bildinformationen des vor der Arbeitsmaschine (100) befindlichen Bestands Bestandshöhen (h) ermittelt werden oder dass eine Abstandsmessung zum Bestand auf dem vor der Arbeitsmaschine befindlichen Gelände durch einen Laser erfolgt und aus dem bestimmten Abstand eine Bestandshöhe ermittelt wird.

## Claims

1. An agricultural working machine (100) comprising a tractor vehicle (101), an implement (102), a sensor device (103) for acquiring at least 2D information and a control device which is connected to the sensor device (103) and the implement (102) and is suitable for controlling at least one operation of the implement (102) in dependence on the information acquired by the sensor device (103), wherein the sensor device (103) is arranged in such a way that it can acquire 2D information on a piece of ground (104) lying in front of the working machine (100), **characterized in that** the sensor device (103) is an optical sensor or comprises an optical sensor, wherein the sensor device can measure crop height (h) of crop located on the piece of ground lying in front of the working machine, and the control unit controls a working height of the implement (102) as a function of the crop height (h), and **in that** the control unit can calculate an optimum working height (463) for the implement from all the crop heights (h1, hi, hn), determined at one time, of a specific area of the piece of ground, wherein the acquisition of 2D information relates to information on the piece of ground which is acquired in a plane which is perpendicular to the direction of travel of the vehicle.

2. The working machine according to claim 1, **characterized in that**the sensor device (103) is designed to acquire information on the piece of ground (104) lying in front of the working machine (100) continuously or at specific time intervals.

3. The working machine according to claims 1 or 2, **characterized in that** the sensor device (103) is configured for acquiring information on the piece of ground (104) lying in front of the working machine (100) at least over an area corresponding to the working width (b) of the implement (102).

4. The working machine according to any one of claims 1 to 3, **characterized in that** the sensor device (103) is arranged on the tractor vehicle (101) and/or on the implement (102).

5. The working machine according to any one of Claims 1 to 4, **characterized in that** the sensor device (103) can acquire 3D information on a piece of ground (104) lying in front of the working machine (100).

6. The working machine according to any one of claims 1 to 5, **characterized in that** the working machine comprises a speed sensor which can measure a current speed of the working machine and can transmit to the control unit a signal which is indicative of the speed, wherein the control unit controls the at least one operation of the implement (102) on the basis of an extrapolation of the speed of the working machine and a time determined this way at which the implement is located over an area of the piece of ground (104) measured by the sensor device (103).

7. The working machine according to claim 1, **characterized in that** the sensor device (103) is a camera, and the control unit can determine a crop height (h) from the image information in images recorded by the camera, or **in that** the sensor device (103) is a laser which can carry out a distance measurement with respect to crop which is located in front of the working machine (103), and the control unit can calculate a crop height (h) from the distance measurement.

8. A method for controlling an implement of an agricultural working machine (100), wherein 2D information on a piece of ground (104) lying in front of the working machine (100) is acquired, and at least one operation of the implement (102) is controlled as a function of the 2D information, **characterized in that** crop heights (h) of crop located on the piece of ground (104) lying in front of the working machine are measured by means of an optical sensor, and the working height of the implement (102) is set as a function of the crop heights (h) , and **in that** an optimum working height (463) is determined from the crop heights (h1, hi, hn) of a specific area of the piece of ground (104) determined at specific time, and the working height of the implement (102) is set in accordance with this optimum working height (463), wherein the acquisition of 2D information refers to information on the piece of ground which is acquired in a plane which is perpendicular to the direction of travel of the vehicle,
wherein the crop height refers to a height of a plant grown on the field.

9. The method according to claim 8, **characterized in that** information on the piece of ground (104) lying in front of the working machine (100) is acquired continuously or at specific time intervals.

10. The method according to claim 9, **characterized in that** the time intervals are variable and are set as a function of the speed and/or acceleration of the working machine (100).

11. The method according to any one of claims 8 to 10, **characterized in that** information about the piece of ground (104) lying in front of the working machine (100) is determined at least across the working width (b) of the implement (102).

12. The method according to any one of claims 8 to 11, **characterized in that** 3D information on a piece of ground (104) lying in front of the working machine (100) is acquired.

13. The method according to any one of claims 8 to 12, **characterized in that** the operation of the implement (102) is controlled as a function of the information about the piece of ground (104) at a time which is dependent on the time at which the information about the piece of ground (104) was acquired, and dependent on the current speed of the working machine (100).

14. The method according to claim 8, **characterized in that** crop heights (h) are determined on the basis of image information on the crop located in front of the working machine (100) recorded by a camera, or **in that** a distance measurement with respect to the crop on a piece of ground located in front of the working machine is carried out by means of a laser, and a crop height is determined from the specific distance.

## Revendications

1. Machine de travail (100) agricole comprenant un véhicule tracteur (101), un appareil de travail (102), un dispositif capteur (103) destiné à acquérir au moins des informations 2D et un dispositif de commande qui est relié au dispositif capteur(103) et à l'appareil de travail (102) et qui est adapté, pour commander au moins une fonction de l'appareil de travail (102) en fonction des informations détectées par le dispositif capteur(103), le dispositif capteur(103) étant disposé de manière à pouvoir détecter des informations 2D d'un terrain (104) situé devant la machine de travail (100), **caractérisée en ce que** le dispositif capteur(103) est un capteur optique ou comporte un capteur optique, le dispositif capteur pouvant mesurer des hauteurs de culture (h) de la culture qui se trouve sur le terrain situé devant la machine de travail et l'unité de commande commandant une hauteur de travail de l'appareil de travail (102) en fonction de la hauteur de culture (h) et **en ce que** l'unité de commande peut calculer à un instant donné, à partir de toutes les hauteurs de culture (h1, hi, hn) d'une zone définie du terrain déterminées, une hauteur de travail (463) optimale pour l'appareil de travail, l'acquisition des informations 2D se rapportant à des informations sur le terrain qui sont acquises dans un plan perpendiculaire au sens de déplacement du véhicule, la hauteur de culture désignant la hauteur d'une plante qui a poussé dans le champ.

2. Machine de travail selon la revendication 1, **caractérisée en ce que** le dispositif capteur (103) est conçu pour acquérir en continu ou à des intervalles de temps déterminés des informations sur un terrain (104) situé devant la machine de travail (100).

3. Machine de travail selon la revendication 1 ou 2, **caractérisée en ce que** le dispositif capteur (103) est conçu pour acquérir des informations sur le terrain (104) situé devant la machine de travail (100) au moins sur une zone qui correspond à la largeur de travail (b) de l'appareil de travail (102).

4. Machine de travail selon l'une des revendications 1 à 3, **caractérisée en ce que** le dispositif capteur (103) est disposé sur le véhicule tracteur (101) et/ou sur l'appareil de travail (102).

5. Machine de travail selon l'une des revendications 1 à 4, **caractérisée en ce que** le dispositif capteur (103) peut acquérir des informations 3D sur un terrain (104) situé devant la machine de travail (100).

6. Machine de travail selon l'une quelconque des revendications 1 à 5, **caractérisée en ce que** la machine de travail comprend un capteur de vitesse qui peut mesurer une vitesse réelle de la machine de travail et transmettre un signal indicatif de la vitesse à l'unité de commande, l'unité de commande commandant ladite au moins une fonction de l'appareil de travail (102) sur la base d'une extrapolation de la vitesse de la machine de travail et d'un instant ainsi déterminé où l'appareil de travail se trouve au-dessus d'une zone du terrain (104) mesurée par le dispositif capteur (103).

7. Machine de travail selon la revendication 1, **caractérisée en ce que** le dispositif capteur(103) est une caméra, et l'unité de commande peut déterminer une hauteur de culture (h) à partir de l'information d'images prises par la caméra, ou **en ce que** le dispositif capteur (103) est un laser qui peut effectuer une mesure de distance par rapport à une culture qui se trouve devant la machine de travail (103), et l'unité de commande peut calculer une hauteur de culture (h) à partir de la mesure de distance.

8. Procédé de commande d'un appareil de travail d'une machine de travail agricole (100), des informations 2D sur un terrain (104) situé devant la machine de travail (100) étant acquises et au moins une fonction de l'appareil de travail (102) étant commandée en fonction des informations 2D, **caractérisé en ce qu'**au moyen d'un capteur optique, des hauteurs (h) de la culture qui se trouve sur le terrain (104) situé devant la machine de travail sont mesurées et la hauteur de travail de l'appareil de travail (102) est réglée en fonction des hauteurs (h) de la culture, et **en ce qu'**à partir des hauteurs (h1, hi, hn) d'une zone déterminée du terrain (104), une hauteur de travail (463) optimale est déterminée et la hauteur de travail de l'appareil de travail (102) est réglée en fonction de cette hauteur de travail (463) optimale, l'acquisition d'informations 2D se rapportant à des informations sur le terrain qui sont acquises dans un plan perpendiculaire au sens de déplacement du véhicule,
où la hauteur de la culture désigne la hauteur d'une plante qui a poussé dans le champ.

9. Procédé selon la revendication 8, **caractérisé en ce que** des informations sur le terrain (104) situé devant la machine de travail (100) sont acquises en continu ou à des intervalles de temps déterminés.

10. Procédé selon la revendication 9, **caractérisé en ce que** les intervalles de temps sont variables et sont réglés en fonction de la vitesse et/ou de l'accélération de la machine de travail (100).

11. Procédé selon l'une des revendications 8 à 10, **caractérisé en ce que** des informations sur le terrain (104) situé devant la machine de travail (100) sont définies au moins par la largeur de travail (b) de l'appareil de travail (102).

12. Procédé selon l'une des revendications 8 à 11, **caractérisé en ce que** des informations 3D sur un terrain (104) situé devant la machine de travail (100) sont acquises.

13. Procédé selon l'une des revendications 8 à 12, **caractérisé en ce que** le fonctionnement de l'appareil de travail (102) est commandé en fonction des informations sur le terrain (104) à un instant qui est fonction de l'instant auquel les informations sur le terrain (104) ont été acquises et qui est fonction de la vitesse actuelle de la machine de travail (100).

14. Procédé selon la revendication 8, **caractérisé en ce que,** sur la base d'informations d'image enregistrées par une caméra de la culture qui se trouve devant la machine de travail (100), des hauteurs de culture (h) sont déterminées ou **en ce qu'**une mesure de distance par rapport à la culture sur le terrain qui se trouve devant la machine de travail est effectuée par un laser et une hauteur de culture est déterminée à partir de la distance définie.
